# EUROPEAN PATENT APPLICATION

(11) **EP 3 661 119 A1**
(43) Date of publication of application: **03.06.2020**
(21) Application number: 18838566.0
(22) Date of filing: 27.07.2018
(51) Int. Cl.: H04L 9/32, H04L 12/58

(54) **METHOD FOR MANAGING INSTANT MESSAGING ACCOUNT IN MANAGEMENT SYSTEM**

(30) Priority: 28.07.2017 CN 201710633373
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/097673
(87) International publication number: WO 2019/020118

(57) **Abstract**

A method for managing an instant messaging account in a management system is disclosed in the present invention, including: creating a system role, wherein the role is an independent individual; relating a role-nature instant messaging account to the role according to work content of the role in the management system, wherein during the same period, one role-nature instant messaging account can only be related to one role, and one role can only be related to one role-nature instant messaging account; and creating a relation between a user and a role, and using the role-nature instant messaging accounts related to all roles related to the user as role-nature instant messaging accounts for the user and/or an employee corresponding to the user. According to the present invention, the employee obtains the role-nature instant messaging account through the role related to the corresponding user. When the employee resigns, the user corresponding to the employee is released from the relation to the role. In this way, the resigned employee automatically loses permissions, thus avoiding the risk of leaking confidential information of the enterprise. When the employee is transferred to a new post, seamless handover can be achieved, and the handover of the messaging accounts will not be delayed or omitted.

## Description

### BACKGROUND

### Technical Field

The present invention relates to a method for managing an instant messaging account in a management system such as an ERP or a CRM

### Related Art

Role-based access control (RBAC) is one of the most researched and mature permission management mechanisms for databases in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of the role-based access control (RBAC) is to divide different roles according to different functional posts in the enterprise organization view, encapsulate the access permission of database resources in roles, and allow users to indirectly access the database resources by assigning different roles to the users.

A large number of tables and views are often built in large-scale application systems, which makes the management and permissions of database resources very complicated. It is very difficult for a user to directly manage the access and permissions of the database resources. It requires the user to have a very thorough understanding of the database structure and to be familiar with the use of the SQL language. Once the application system structure or security requirements have changed, a large number of complex and cumbersome permission changes are required, and the security vulnerabilities caused by some unexpected authorization errors are very likely to occur. Therefore, designing a simple and efficient permission management method for large-scale application systems has become a common requirement for systems and system users. Therefore, designing a simple and efficient permission management method for large-scale application systems has become a common requirement for systems and system users.

The role-based permission control mechanism can manage the access permissions of the system simply and efficiently, which greatly reduces the burden and cost of the permission management of the system, and makes the permission management of the system more compliant with the business management specifications of the application system.

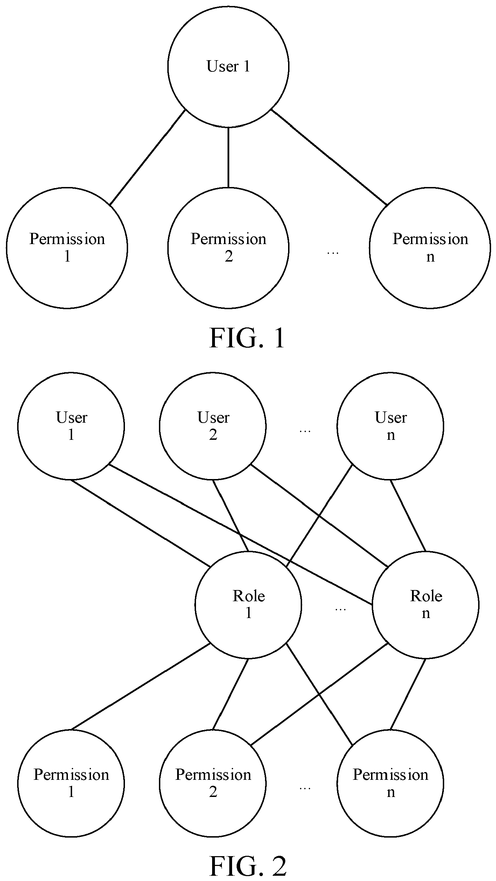

However, the conventional role-based user permission management method adopts the "role-to-user one-to-many" relation mechanism, wherein the "role" has the nature of a group or class. That is, one role can simultaneously correspond to or be related to multiple users, and the role is similar to a post or a position or a type of work or other concepts. The permission authorization to a user under this relation mechanism is basically divided into the following three forms: 1. As shown in FIG. 1, the permission is directly authorized to the user, where the disadvantage is that the workload is large and the operation is frequent and cumbersome. When changes on the employee have occurred (such as transfer or resignation), all permissions related to the employee need to be adjusted correspondingly. Especially, for administrators in a company, many permissions are involved. As the permission adjustment involves large workloads and is cumbersome, errors or omissions are likely to occur, thereby affecting the normal operation of the enterprise and even causing unpredictable losses.

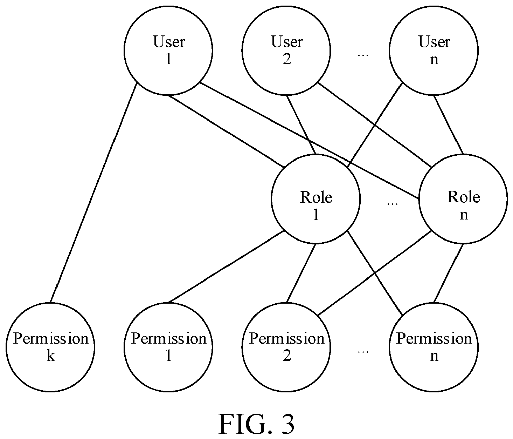

2. As shown in FIG. 2, the role (having the nature of a class/a group/a post/a type of work) is authorized (one role may be related to multiple users), the user obtains permissions through its role, and the permission authorization subject is the role that has the nature of a group or class. 3. As shown in FIG. 3, the above two forms are combined.

In the above descriptions, as both form 2 and form 3 need to authorize the role that has the nature of a class or group. The way of authorization through the role having the nature of a class/a group/a post/a type of work has the following disadvantages: 1. Operations are difficult when the user's permission has changed. In the actual process of using a system, the user's permissions often need to be adjusted during the operation process. For example, in processing of the change of employee's permissions, when the permissions of an employee related to the role have changed, it is improper to change the permissions of the entire role due to the change of the permissions of the individual employee, because this role is also related to other employees whose permissions remain unchanged. Therefore, to deal with this situation, either a new role is created to fit the employee whose permissions have changed, or permissions are directly authorized to the employee (disengaged from the role) based on permission requirements. The above two processing methods not only take a long time but also cause mistakes easily for the role authorization in the case of a relatively large number of role permissions. It is cumbersome for a user to operate, and errors occur easily, thereby resulting in loss to the system user.

When the form operation permissions of the employee or user have changed, either the employee/user is disengaged from the role, or a new role is added to meet the requirements of work. The defect of the first way is the same as that of the foregoing method of "direct authorization to the user". In the second way, adding a new role involves creation, relation, and authorization of the role. Especially when there are many roles and many users related to the roles, it is difficult to remember which users are specifically related to the role.
2. It is difficult to remember the specific permissions contained in a role for a long time. If the role has many permission function points, as time goes by, it is difficult to remember the specific permissions of the role, and it is even more difficult to remember the permission differences between roles with similar permissions. The permissions of similar roles are also easily confusable. If a new user needs to be related, it is impracticable to accurately determine how to select a relation.
3. Because user permissions change, more roles will be created (if new roles are not created, direct authorization to the user will be increased greatly), and it is more difficult to distinguish specific differences between permissions of the roles.
4. When a user is transferred from a post, if many permissions of the transferred user need to be assigned to other users, distinguishing the permissions of the transferred user and creating roles to relate to the other users respectively are necessary during the processing. Such operations are not only complicated and time-consuming, but also prone to errors.

Instant messaging is an important internal and external communication tool for various enterprises and institutions. Currently, commonly used instant messaging software includes QQ, WeChat, MSN, Fetion, and the like. In conventional enterprise management modes, instant messaging accounts such as QQ numbers are usually directly assigned to individuals or users. During the process of using, the following problems will occur. A. If an employee works for multiple posts in the enterprise, work handover cannot be performed effectively when the employee resigns or is transferred. For example, Zhang San serves as a sales engineer in the sales department I of the building materials business division and a sales engineer in the sales department I of the aircraft business division at the same time. Zhang San now needs to be disengaged from the sales engineer in the sales department I of the business aircraft division, and this post will be taken over by Li Si. However, Zhang San's QQ account cannot be directly handed over to Li Si because many building materials-related customers still remain in the Zhang San's QQ account and need to be further contacted and followed up. Li Si has to use a new QQ account to add the aircraft-related customers (adding a customer is subject to consent of the customer, which not only increases the workload and delays the work, but also faces the possibility of being rejected by the customer due to the customer's unawareness of who is requesting to add, thus affecting the work). In this way, on the one hand, it is likely to give an unfavorable impression on the customer. On the other hand, Li Si is also unaware of Zhang San's previous communication (message records) with the aircraft-related customers, and the aircraft-related customers are likely to continue to contact Zhang San, thus tending to leak confidential information on the aircraft-related customers.
B. If Zhang San resigns and Li Si takes over Zhang San's QQ account, Li Si will be able to see the QQ message records and new messages from the building materials-related customers (Li Si takes over the sales work of only the aircraft business division), thus tending to leak the confidential information of the building materials-related customers. Similarly, an employee who only takes over the sales work of the building materials business division is improper to take over the Zhang San's QQ account, because the employee who takes over the Zhang San's QQ account will see the QQ message records and new messages from the aircraft-related customers.
C. The QQ account is allocated to an individual without being bound to a fixed individual or user for life, and is manually allocated to an employee for use (manually relating/allocating the QQ account to the employee has obvious disadvantages: in the longterm process of repeated and continuous allocation, after the QQ account is allocated to an employee, the work scope corresponding to the employee is very likely to be sharply different from the work scope corresponding to the QQ account allocated to the employee, or even there may be an error occurring therebetween; but the QQ account is still used, and even is in use for a relatively long or a very long period of time, which may bring great perplexities and troubles to subsequent work and bring immeasurable losses). Therefore, in the process of allocation, leakage of the confidential information of the enterprise is very likely to occur. For example, a QQ account was first allocated to the salesperson Zhang San for use (Zhang San is responsible for the sales in the building materials sector). Later, Zhang San gave up the QQ account due to resignation or other reasons, and the QQ account was allocated to the salesperson Li Si for use (Li Si is responsible for the sales in the aircraft sector), and then after the QQ account is no longer used by Li Si, it is allocated to Wang Wu who was a salesperson in charge of the sales in the software sector, and so on. In this way, the incoming and outgoing messages in the QQ account may involve the customers in all sectors of the company. The company divides the salespersons' market scopes from the perspective of industrial sectors, and forbids a salesperson from obtaining any information on other sectors beyond the sector in the charge of the salesperson. The above problem is grim enough, but even worse: if the customers from the sector not undertaken by a salesperson contact with the salesperson through the QQ account previously, and may keep sending subsequent messages to the QQ account, the subsequent messages will be constantly learned by the salesperson who is not supposed to know. The situation could be even worse. If the QQ account that has been used by the financial personnel and the QQ account that has been used by the research and development personnel are related to a salesperson after being related repeatedly, the confidential research and development information or the confidential financial information will be learned by the salesperson currently in relation, and the leakage of sensitive information is very likely to occur and may cause gross losses to the company.
D. Whenever an employee joins the company or is transferred to a new post, an instant messaging account needs to be related to the employee, which involves a huge workload (or relation errors may occur). Moreover, certain hysteresis exists in re-relating the instant messaging account to the employee, and will affect the normal progress of relevant work. For example, when an employee A is transferred from a position as a production supervisor to a position as a sales supervisor, after the current instant messaging account of the employee A is handed over to his/her successor, if the employee A is not related to a new instant messaging account, the employee A cannot carry out corresponding work for lack of an instant messaging account currently. If the current instant messaging account of the employee A is not handed over to his/her successor, the successor cannot learn previous communication information related to business, which is unfavorable to the normal progress of the work. For another example, an employee A who serves as both a production supervisor and an after-sales supervisor is now disengaged from the position as the production supervisor (the instant messaging account of the employee A is not suitable for handover to his/her successor because it contains the communication information about the work of the after-sales supervisor). If a new instant messaging account is allocated to the successor of the production supervisor, the communication contact persons (such as equipment maintenance personnel, and outsourced manufacturers) need to be notified one by one. This not only involves a heavy workload but also imposes additional work to the opposing party. In addition, the employee A may still receive subsequent production-related communication messages (for example, in the case that an information sender is unaware of the disengagement of the employee A from the position as a production supervisor). For another example, when the employee A is transferred from the position as a production supervisor to the position as a sales supervisor, if no new instant messaging account is allocated to the employee A immediately after the current instant messaging account of the employee A is handed over to his/her successor, the employee A cannot handle work through an instant messaging account during the lag, which is unfavorable to the normal progress of the work.

### SUMMARY

### Technical Problems

The object of the present invention is to overcome the disadvantages of the prior art, and provide a method for managing an instant messaging account in a management system, in which one role-nature instant messaging account is bound to one role. An employee (when recruited) obtains a role-nature instant messaging account through a role related to a corresponding user. When the employee resigns, a system administrator (or a corresponding administrator) directly cancels the relation of the user corresponding to the employee to the role, so that the resigned employee automatically loses the permission of using the role-nature instant messaging account, thus avoiding the risks of leaking confidential information of the enterprise. When the employee is transferred from a post, the system administrator (or the corresponding administrator) directly cancels the relation of the employee (the user corresponding to the employee) to the original role, and then relates the employee to a new role so that the employee automatically obtains the role-nature instant messaging account corresponding to the new role. This achieves seamless handover, and ensures that the instant messaging account used by the user is updated in time, without the hysteresis or omission of the handover of the messaging account, and without affecting the employee's normal use of the messaging account. The risks of leaking confidential information are also avoided.

### Solutions to Problems

### Technical Solutions

The object of the present invention is achieved by using the following technical solutions. A method for managing an instant messaging account in a management system includes the following steps:
(1) creating a role in a system, wherein said role is an independent individual not a group/a class, and during the same period, one role can only be related to a unique user, while one user is related to one or more roles;
(2) relating a role-nature instant messaging account to the role according to work content of the role in the management system, wherein during the same period, one role-nature instant messaging account can only be related to one role, and one role can only be related to one role-nature instant messaging account and
(3) creating a relation between a user and a role, and for any user, using the role-nature instant messaging accounts related to all roles related to the user as role-nature instant messaging accounts of the user and/or an employee corresponding to the user.

Step (3) may be performed after step (1), before step (2), or after step (2).

After a role-nature instant messaging account is related to a role, the role-nature instant messaging account related to the role cannot be replaced; or, after a role-nature instant messaging account is related to a role and the role-nature instant messaging account is put into use, the role-nature instant messaging account related to the role cannot be replaced.

When a role-nature instant messaging account of a role needs to be replaced, a relation of the role to the original role-nature instant messaging account is canceled, and the role is related to a new role-nature instant messaging account.

The method for managing an instant messaging account further includes: selecting one or more roles as supervising roles, and setting a supervised role for each supervising role respectively, so that a user related to the supervising role or an employee corresponding to the user can operate role-nature instant messaging accounts related to all supervised roles corresponding to the supervising role, wherein said operation includes viewing communication content.

The method for managing an instant messaging account further includes: relating an individual-nature instant messaging account to a user/an employee, wherein during the same period, one user/one employee can only be related to one individual-nature instant messaging account, and one individual-nature instant messaging account can only be related to one user/one employee. In the present application, the user and the employee are in a one-to-one relation. That is, one user corresponds to one employee, and one employee corresponds to one user. The correspondence between the user and the employee, once established, is always sustained, and the user who has already corresponded to an employee cannot correspond to another employee.

After an individual-nature instant messaging account is related to a user/an employee, the individual-nature instant messaging account related to the user/employee cannot be replaced; or, after an individual-nature instant messaging account is related to a user/an employee and the individual-nature instant messaging account is put into use, the individual-nature instant messaging account related to the user/employee cannot be replaced.

When an individual-nature instant messaging account is related to a user, the individual-nature instant messaging account related to the user is used as an individual-nature instant messaging account of an employee corresponding to the user.

When an individual-nature instant messaging account is related to an employee, the individual-nature instant messaging account related to the employee is used as an individual-nature instant messaging account of a user corresponding to the employee.

The method for managing an instant messaging account further includes: selecting one or more roles as supervising roles, and setting a supervised role for each supervising role respectively, so that: a user related to the supervising role or an employee corresponding to the user can operate individual-nature instant messaging accounts of a user related to all supervised roles corresponding to the supervising role; or a user related to the supervising role or an employee corresponding to the user can operate individual-nature instant messaging accounts of an employee corresponding to a user related to all supervised roles corresponding to the supervising role.

The role-nature instant messaging account is an account of an instant messaging application in the system or an account of instant messaging software provided by a third party, and the individual-nature instant messaging account is an account of an instant messaging application in the system or an account of instant messaging software provided by a third party.

### Beneficial Effects of the Invention

### Beneficial Effects

The present invention has the following beneficial effects. (1) The present invention provides a method for managing an instant messaging account in a management system, in which one role-nature instant messaging account is bound to one role. An employee (when recruited) obtains a role-nature instant messaging account through a role related to a corresponding user. When the employee resigns, a system administrator (or a corresponding administrator) directly cancels the relation of the user corresponding to the employee to the role, so that the resigned employee automatically loses the permission of using the role-nature instant messaging account, thus avoiding the risks of leaking confidential information of the enterprise. When the employee is transferred from a post, the system administrator (or the corresponding administrator) directly cancels the relation of the employee (the user corresponding to the employee) to the original role, and then relates the employee to a new role so that the employee automatically obtains the role-nature instant messaging account corresponding to the new role. This achieves seamless handover, and ensures that the instant messaging account used by the user is updated in time, without the hysteresis or omission of the handover of the messaging account, and without affecting the employee's normal use of the messaging account. The risks of leaking confidential information are also avoided.

Resignation example: A role-nature instant messaging account related to a role "production worker 1" is a QQ number 123456. When a user corresponding to an employee Zhang San is related to the "production worker 1", Zhang San uses the QQ number 123456. When Zhang San resigns, a system administrator (or a corresponding administrator) directly cancels the relation of the user corresponding to Zhang San to the role "production worker 1", and therefore, Zhang San automatically loses the permission of using the QQ number 123456, thus avoiding the leakage of confidential information about the "production worker 1" to Zhang San due to the hysteresis of QQ number handover. When a newly recruited employee Li Si takes over the work of Zhang San, the administrator directly relates a user corresponding to Li Si to the "production worker 1", so that Li Si automatically obtains the permission of using the role-nature QQ number 123456 corresponding to the role "production worker 1", without a need to re-allocate a new QQ number to Li Si. The operation is simple and fast, and the workload is greatly reduced. In addition, Li Si who takes over the work can view the historical messages previously exchanged between Zhang San and the QQ contact person, thus bringing better handover effects, facilitating the normal progress of the work, and achieving the ease of use.

Post transfer example: An employee Zhang San needs to be transferred from a production department to an after-sales department. The system administrator cancels the relation of the user corresponding to Zhang San to the original role "production worker 1", and then relates Zhang San to a new role "after-sales staff 3" in the after-sales department, so that Zhang San automatically obtains the permission of using a role-nature QQ number 987654 corresponding to the role "after-sales staff 3".
(2) According to the present invention, a role-nature instant messaging account is related to each role, and a corresponding role-nature instant messaging account is allocated to an employee while a post number or a job is allocated to the employee, without a need to allocate an instant messaging account to the employee separately. No hysteresis of allocating the role-nature instant messaging account occurs in the case of resignation, post transfer, recruitment, and the like, thus reducing the workload of allocating instant messaging accounts.
   For example, after the user corresponding to an employee A is related to a role A and a role B, the role-nature instant messaging accounts related to the role A and the role B are automatically allocated to the employee A, without a need to separately allocate an instant messaging account to the employee A.
(3) After an employee is transferred from a post or resigned, the role-nature instant messaging account related to the role, which needs to be allocated to another employee, will not be allocated to an employee who does not undertake work content of the role because the role in the present invention has the nature of a post number/station number, thus preventing the communication messages from being leaked to unrelated persons while the instant messaging account is transferred to another user.
   For example, the user corresponding to an employee A is related to both a role of an appliance salesperson 1 and a role of a software salesperson 1. Since the employee A has resigned (when the employee A resigns, both the role of the appliance salesperson 1 and the role of the software salesperson 1 are released from the relation to the user corresponding to the employee A, and therefore, the employee A or a user corresponding to the employee A automatically loses the permission of using "the role-nature instant messaging account related to the appliance salesperson 1 and the role-nature instant messaging account related to the software salesperson 1"), the appliance salesperson 1 is related to a user corresponding to an employee B (the employee B obtains the role-nature instant messaging account related to the appliance salesperson 1), and the software salesperson 1 is related to a user corresponding to an employee C (the employee C obtains the role-nature instant messaging account related to the software salesperson 1). In this way, the employee B can only obtain the information about appliance sales through the role-nature messaging account corresponding to the "appliance salesperson 1", without an access to the information about software sales. Similarly, the employee C can only obtain the information about software sales through the role-nature messaging account corresponding to the "software salesperson 1", without an access to the information about appliance sales.
(4) In the present invention, a role is related to a role-nature instant messaging account according to the work content. Therefore, when sending a message, a contact person in the messaging account does not need to worry about whether the content of the message will be leaked to unrelated persons, because the current user of the role-nature instant messaging account is surely in charge of the relevant work currently. For example, the work content of a role A is attendance statistics, and the role A is related to an instant messaging account X. Therefore, after the role A is related to the user corresponding to the employee A, the employee A becomes a current user of the instant messaging account X, and the current work content of the employee A surely includes attendance statistics. After a contact person in the instant messaging account X sends an attendance-related message to the instant messaging account X, the attendance-related message will be invisible to any unrelated person.
(5) After a role is related to a role-nature instant messaging account, the role-nature instant messaging account related to the role cannot be replaced. In this way, all the messages related to the work content of the role are collected in the messaging account, without the need to worry about whether the instant messaging account is changed midway.
   For example, once the role A is related to the instant messaging account X, the role A cannot be related to another instant messaging account, and the instant messaging account X cannot be related to another role either.
(6) A user related to a supervising role or an employee corresponding to the user, if authorized by the supervising role, is entitled to view the communication content of an instant messaging account of a user related to a supervised role or an employee corresponding to the user (or to view the communication content of an instant messaging account related to the supervised role), thereby facilitating a supervisor in supervising and managing the work of his/her subordinates (or corresponding roles).
(7) An individual-nature instant messaging account is set for a user/an employee to send and receive private information of the user/employee, thus separating a work instant messaging account (a role-nature instant messaging account, which is used to process instant messaging information about work) from a private instant messaging account (an individual-nature instant messaging account, which is used to process private instant messaging information). Because the user/employee's individual-nature instant messaging account will not be allocated to other employees/users (once the individual-nature instant messaging account is related to an employee or user, the relation is always sustained and unreplaceable), the user/employee does not need to worry about the leakage of private information caused by the handover of the messaging account after a job change.
   For example, if an employee A is late for work but his/her supervisor refrains from deducting wages of the employee A in view of good business results of the employee A, the supervisor may explain this by sending a message to the individual-nature instant messaging account of the employee A, without worrying about a risk of bringing adverse effects on the company in consequence of leaking the message to a successor who takes over the work of the employee A after the employee A is resigned or transferred from a post.
(8) In the present application, the role is in one-to-one relation to the user. During the same period, one role can only be related to a unique user, and one user is related to one or more roles. The advantage thereof is that the permissions can be obtained as long as the user is related to the role (that is, the user obtains the permissions of its related role), and changes of the role's permissions are much fewer than the changes of the user's permissions in a conventional mechanism. As there are few changes of the quantity of roles having the nature of an independent individual (the nature of a post number or a station number), despite a high turnover of employees, few changes occur in the post number/station number (even there is no change within a certain period, that is, the role does not change). This greatly simplifies the user's permission management and reduces system overheads.
(9) The operations such as dynamic management, recruitment, and transfer are simple, convenient, efficient and highly reliable. The application of recruitment or resignation or transfer in the permission management is simple. When an employee or a user has changed, it is unnecessary to reset permissions. It is only necessary for a user to cancel the relation or be related to the role. For the user who is no longer in the role, the relation to the role is canceled; and the user who takes over the role is related to the role corresponding to the post number. The user related to the role automatically obtains the role-nature messaging account of the role and its operation permission, without a need to re-authorizing the role, thus significantly increasing the efficiency, security, and reliability of system setting.
   For example, because user Zhang San resigns or is transferred from a post, Zhang San no longer works as a role of "purchaser 3", and Zhang San then cancels the relation to the "purchaser 3". Meanwhile, Li Si takes over the work as the role of "purchaser 3", and it is only necessary to relate Li Si to the role, so Li Si automatically obtains the permissions of the role of "purchaser 3" (because the role has been authorized according to the role's work content) and a role-nature messaging account.
(10) The conventional permission management mechanism defines the role as the nature of a group, a type of work (a post), a class or the like. The role is in a one-to-many relation to the user. In the actual process of using a system, the user's permissions often need to be adjusted during the operation process. For example, in processing the change of employee's permissions, when the permissions of an employee related to the role have changed, it is improper to change the permissions of the entire role due to the change of the permissions of the individual employee, because this role is also related to other employees whose permissions remain unchanged. To deal with this situation, either a new role is created to fit the employee whose permissions have changed, or permissions are directly authorized to the employee (disengaged from the role) based on permission requirements. The above two processing methods not only take a long time but also cause mistakes easily for the role authorization in the case of a large number of role permissions. It is cumbersome for a user to operate, and errors occur easily, resulting in the loss to the user of the system.
   However, under the method of the present application, as the role is an independent individual, the object can be achieved by changing the permissions of the role. Although the method in the present application seems to increase the workload during system initialization, by means of copying or the like, the role can be created or authorized more efficiently than the conventional roles having the nature of a group/a class. As it is unnecessary to consider the commonality of the roles having the nature of a group/a class when satisfying the related users, the solutions in the present application make the permission setting clear and explicit. Especially after the system has been used for a period of time (after the permissions of the user/role have changed dynamically), the solutions in the present application can significantly improve the efficiency of permission management for the user of the system in using the system, make the dynamic authorization simpler, more convenient, clearer and more explicit, and improve the efficiency and reliability of the permission setting.
(11) The conventional role authorization method with the nature of a group/class is prone to errors. The method provided in the present application significantly reduces the probability of authorization errors, because the method of the present application only needs to consider the role as an independent individual, without considering the commonality of multiple users related to the role having the nature of a group under the conventional method. Even if errors occur in authorization, only the user related to the role is affected. However, in the case of the conventional role having the nature of a group, all users related to the role are affected. Even if errors occur in authorization, the correction method in the present application is simple and takes a short time, while in the case of the conventional role having the nature of a group, the commonality of the permissions of all users related to the role needs to be considered during correcting the error. The modification is cumbersome, complex, and error-prone when the role has many function points, and in many cases, the problem cannot be solved unless a new role is created.
(12) In the conventional group-based role authorization method, if the role has many permission function points, as time goes by, it is difficult to remember specific permissions of the role, and it is even more difficult to remember the permission differences between roles with similar permissions. If a new user needs to be related, it is impracticable to accurately determine how to select a relation. In the method of the present application, the role itself has the nature of a post number or station number, such that the selection can be made easily.
(13) When a user is transferred from a post, if many permissions of the transferred user need to be assigned to other users, in processing, it is necessary to distinguish the permissions of the transferred user and create roles to relate to other users respectively. The operations are complicated, time-consuming, and prone to errors.

The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role having the nature of a group/a class in the prior art;
FIG. 3 is a schematic diagram in which a system both directly authorizes a user and authorizes a role having the nature of a group/a class in the prior art;
FIG. 4 is a schematic diagram in which a system authorizes a user through a role having the nature of an independent individual according to the present invention; and
FIG. 5 is a flowchart of a management method according to an embodiment of the present invention.

### DETAILED DESCRIPTION

### Description of Embodiments

The technical solutions of the present invention will be further described in detail below with reference to the accompanying drawings, but the protection scope of the present invention is not limited to the following descriptions.

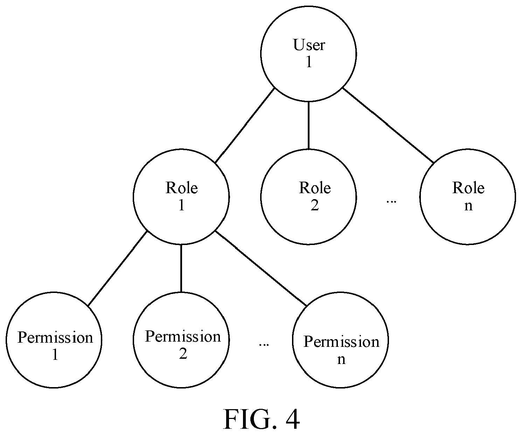

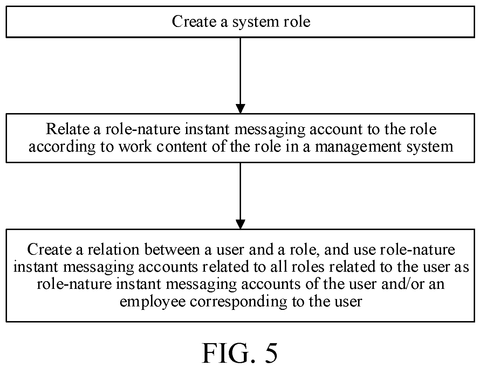

[Embodiment 1] As shown in FIG. 5, a method for managing an instant messaging account in a management system includes the following steps: creating a system role. As shown in FIG. 4, the role is an independent individual not a group/a class. During the same period, one role can only be related to a unique user, and one user is related to one or more roles. One user corresponds to one employee, one employee corresponds to one user, and an employee determines (obtains) permissions based on a role related to a user corresponding to the employee. An employee and a user are in a one-to-one relation reciprocally and are bound for life. After a user corresponds to an employee, the user belongs to the employee, and the user cannot relate to other employees. If the employee resigns, the user cannot correspond to other employees either. After the employee is re-recruited, the employee still corresponds to the original user.

The method further includes: relating a role-nature instant messaging account to the role according to the work content of the role in the management system (for a role, this step may further be understood as: relating an instant messaging account to the role according to the work content of the role in the management system, and using the instant messaging account as a role-nature instant messaging account of the role), wherein the role-nature instant messaging account is an instant messaging account having the nature of a post number/a station number. During the same period, a role-nature instant messaging account can only be related to one role, and one role can only be related to one role-nature instant messaging account. When a role-nature instant messaging account of a role needs to be replaced, the relation of the role to the original role-nature instant messaging account is canceled, and the role is related to a new role-nature instant messaging account.

The role-nature instant messaging account is an account of an instant messaging application (software) in the system (that is, the instant messaging account is an instant messaging account in the system; in this case, the method further includes a step of creating an instant messaging account/an role-nature instant messaging account), and/or an account of instant messaging software provided by a third party (that is, the instant messaging account is a QQ number, a WeChat number, or the like).

The method for managing an instant messaging account in a management system further includes: creating a relation between a user and a role, and for any user, using the role-nature instant messaging accounts related to all roles related to the user as role-nature instant messaging accounts of the user and/or an employee corresponding to the user.

In the present invention, one role-nature instant messaging account is bound to one role. An employee obtains a role-nature instant messaging account through a role related to a corresponding user. When the employee resigns, a system administrator (or a corresponding administrator) directly cancels the relation of the user corresponding to the employee to the role, so that the resigned employee automatically loses the permission of using the role-nature instant messaging account, thus avoiding the risks of leaking confidential information of the enterprise. When the employee is transferred from a post, the system administrator (or the corresponding administrator) directly cancels the relation of the employee to the original role, and then relates the employee to a new role so that the employee automatically obtains a role-nature instant messaging account corresponding to the new role. This achieves seamless handover, and ensures that the instant messaging account used by the user is updated in time, without the hysteresis or omission of the handover of the messaging account, and without affecting the employee's normal use of the messaging account. The risks of leaking confidential information can also be avoided.

Resignation example: A role-nature instant messaging account related to a role "production worker 1" is a QQ number 123456. When a user corresponding to an employee Zhang San is related to the "production worker 1", Zhang San uses the QQ number 123456. When Zhang San resigns, the system administrator (or the corresponding administrator) directly cancels the relation of the user corresponding to Zhang San to the role "production worker 1", and therefore, Zhang San automatically loses the permission of using the QQ number 123456, thus avoiding the leakage of confidential information about the "production worker 1" to Zhang San due to the hysteresis of QQ number handover. When a newly recruited employee Li Si takes over the work of Zhang San, the administrator directly relates the user corresponding to Li Si to the "production worker 1", so that Li Si automatically obtains the permission of using the role-nature QQ number 123456 corresponding to the role "production worker 1", without a need to re-allocate a new QQ number to Li Si. The operation is simple and fast, and the workload is greatly reduced. In addition, Li Si who takes over the work can view the historical messages previously exchanged between Zhang San and the QQ contact person, thus bringing better handover effects, facilitating the normal progress of the work, and achieving the ease of use.

Post transfer example: An employee Zhang San needs to be transferred from a production department to an after-sales department. The system administrator cancels the relation of the user corresponding to Zhang San to the original role "production worker 1", and relates Zhang San to a new role "after-sales staff 3" in the after-sales department, so that Zhang San automatically obtains the permission of using a role-nature QQ number 987654 corresponding to the role "after-sales staff 3".

After an employee is transferred from a post or resigned, the role-nature instant messaging account related to the role, which needs to be allocated to another employee, will not be allocated to an employee who does not undertake work content of the role because the role in the present invention has the nature of a post number/station number, thus preventing the communication messages from being leaked to unrelated persons while the instant messaging account is transferred to another user.

For example, the user corresponding to an employee A is related to an appliance salesperson 1 and a software salesperson 1. Since the employee A has resigned, the appliance salesperson 1 is related to a user corresponding to an employee B, and the software salesperson 1 is related to a user corresponding to an employee C. Therefore, the employee B can only obtain information about appliance sales through the role-nature messaging account corresponding to "appliance salesperson 1", without an access to information about software sales. Similarly, the employee C can only obtain the information about software sales through the role-nature messaging account corresponding to "software salesperson 1", without an access to the information about appliance sales.

In the present invention, a role is related to a role-nature instant messaging account according to the work content, so that the content of messages from the contact persons in the messaging account are free from being leaked to unrelated persons because the current user of the role-nature instant messaging account is surely in charge of the relevant work currently. For example, the work content of a role A is attendance statistics, and the role A is related to an instant messaging account X. Therefore, after the role A is related to a user corresponding to the employee A, the employee A becomes a current user of the instant messaging account X, and the current work content of the employee A surely includes attendance statistics. After a contact person in the instant messaging account X sends an attendance-related message to the instant messaging account X, the attendance-related message will be invisible to any unrelated person.

[Embodiment 2] As shown in FIG. 5, a method for managing an instant messaging account in a management system includes the following steps: creating a system role. As shown in FIG. 4, the role is an independent individual not a group/a class. During the same period, one role can only be related to a unique user, while one user is related to one or more roles; relating a role-nature instant messaging account to a role according to work content of the role in the management system, wherein during the same period, one role-nature instant messaging account can only be related to one role, and one role can only be related to one role-nature instant messaging account; and creating a relation between a user and a role, and for any user, using the role-nature instant messaging accounts related to all roles related to the user as role-nature instant messaging accounts of the user and/or an employee corresponding to the user.

In this embodiment, after a role-nature instant messaging account is related to a role, the role-nature instant messaging account related to the role cannot be replaced; or, after a role-nature instant messaging account is related to a role and the role-nature instant messaging account is put into use, the role-nature instant messaging account related to the role cannot be replaced. That is, the role is bound to the role-nature instant messaging account for life. If the role is disabled, the corresponding role-nature instant messaging account cannot be related to any more roles, but a user related to a supervising role corresponding to the role or an employee corresponding to the user can still operate the role-nature instant messaging account. After the role is re-enabled, the role still uses the originally related role-nature instant messaging account.

After a role is related to a role-nature instant messaging account, the role-nature instant messaging account related to the role cannot be replaced. In this way, all the messages related to the work content of the role are collected in the messaging account, without the need to worry about whether the instant messaging account is changed midway.

For example, once the role A is related to the instant messaging account X, the role A cannot be related to another instant messaging account, and the instant messaging account X cannot be related to another role either.

[Embodiment 3] In this embodiment, the method for managing an instant messaging account further includes: selecting one or more roles as supervising roles, and setting a supervised role for each supervising role respectively, so that a user related to the supervising role or an employee corresponding to the user can operate role-nature instant messaging accounts related to all supervised roles corresponding to the supervising role, wherein said operation includes viewing communication content.

If the communication content is not checked by the user related to the supervised role, the communication content is still displayed as an unchecked status, but check records of the supervising role will be displayed, for example, the supervising role who performed the operation, the user related to the supervising role, and the employee corresponding to the user, operation time, operation content, and the like.

The deletion of the communication content of the role-nature instant messaging account is subject to the consent and confirmation of the supervising role (or the corresponding administrator), thus preventing useful communication content from being deleted maliciously.

[Embodiment 4] In this embodiment, the method for managing an instant messaging account further includes: selecting one or more roles as supervising roles, and setting a supervised role for each supervising role respectively, so that: a user related to the supervising role or an employee corresponding to the user can operate individual-nature instant messaging accounts of a user related to all supervised roles corresponding to the supervising role; or a user related to the supervising role or an employee corresponding to the user can operate individual-nature instant messaging accounts of an employee corresponding to a user related to all supervised roles corresponding to the supervising role.

If authorized, the user related to the supervising role is entitled to view the communication content of the instant messaging account of the user/employee related to the supervised role, thus facilitating a supervisor in supervising and managing the work of his/her subordinates.

[Embodiment 5] In this embodiment, the method for managing an instant messaging account further includes: relating an individual-nature instant messaging account to a user/an employee (for a user/an employee, this step can be further understood as: relating an instant messaging account to the user/employee to serve as an individual-nature instant messaging account of the user/employee), wherein during the same period, one user/one employee can only be related to one individual-nature instant messaging account, and one individual-nature instant messaging account can only be related to one user/one employee.

The individual-nature instant messaging account is an account of an instant messaging application (software) in the system (that is, the instant messaging account is an instant messaging account in the system; in this case, the method further includes a step of creating an instant messaging account/an individual-nature instant messaging account), and/or an account of instant messaging software provided by a third party (that is, the instant messaging account is a QQ number, a WeChat number, or the like).

After the user/employee resigns, the individual-nature instant messaging account related to the user/employee will be suspended, and the individual-nature instant messaging account will not be allocated to another employee/user either, thus preventing leaking the communication content in the individual-nature instant messaging account. However, if authorized, the supervisor of the employee can still operate the individual-nature instant messaging account. If the employee is re-employed by the company after resignation, the original individual-nature instant messaging account of the employee is automatically re-allocated to the employee or the user corresponding to the employee (once the individual-nature instant messaging account is related to the user, the relation is always sustained and cannot be changed; once the individual-nature instant messaging account is related to the employee, the relation is always sustained and cannot be changed).

After an individual-nature instant messaging account is related to a user/an employee, the individual-nature instant messaging account related to the user/employee cannot be replaced; or, after an individual-nature instant messaging account is related to a user/an employee and the individual-nature instant messaging account is put into use, the individual-nature instant messaging account related to the user/employee cannot be replaced.

When an individual-nature instant messaging account is related to a user, the individual-nature instant messaging account related to the user is used as an individual-nature instant messaging account of an employee corresponding to the user. When an individual-nature instant messaging account is related to an employee, the individual-nature instant messaging account related to the employee is used as an individual-nature instant messaging account of a user corresponding to said employee.

An individual-nature instant messaging account is set for a user/an employee to send and receive private information of the user/employee, thus separating a work messaging account (a role-nature instant messaging account, which is used to exchange work information within a work scope corresponding to the account) from a private messaging account (an individual-nature instant messaging account, which is used to exchange private information). Because the user/employee's individual-nature instant messaging account will not be allocated to other employees/users, the user/employee do not need to worry about the leakage of the private information caused by the handover of the messaging account after a job change.

For example, if an employee A is late for work but his/her supervisor refrains from deducting wages of the employee A in view of good business results of the employee A, the supervisor may explain this by sending a message to the individual-nature instant messaging account of the employee A, without worrying about a risk of bringing adverse effects on the company in consequence of leaking the message to a successor who takes over the work of the employee A after the employee A is resigned or transferred from a post.

In the present application, in creating a role, a department is necessarily selected for it. Once a department is selected for the role, the role belongs to the department. The name of the role is unique in the department, the number of the role is unique in the system, and the role is authorized based on the work content of the role.

If the user needs to be transferred across the departments, the method further includes a step of managing the transfer of a user across the departments, specifically including: (1) canceling a relation of the user to a role in an original department; and (2) relating the user to a role in a new department, so that the user automatically obtains the permissions corresponding to the instant messaging account related to the role.

In the above embodiment, as shown in FIG. 4, the instant messaging account management in the present application adopts a role having the nature of an independent individual. In the following, the advantages of the method for authorizing permissions to a user based on a role having the nature of an independent individual are analyzed: The user determines (obtains) permissions through its relation to the role. If the permissions of the user need to be modified, the permissions owned by the role are adjusted to achieve the object of changing the permissions of the user related to the role. Once the user is related to the role, the user owns all the operation permissions of the role.

A role is in a one-to-one relation to a user (when the role is related to one user, other users can no longer be related to that role; and if the role is not related to any user, the role can be selected to be related to other users; that is, in the same period, one role can only be related to one user). A user is in a one-to-many relation to roles (one user can be related to multiple roles at the same time).

Definition of a role: A role does not have the nature of a group/a class/a category/a post/a position/a type of work or the like, but has non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, the roles to which Zhang San needs to be related are the deputy general manager 2 and the manager of Beijing sales department I, and Zhang San owns the permissions of the two roles.

The concept of conventional roles has the nature of a group/a class/a post/a position/a type of work, and one role can correspond to multiple users. However, in the present application, the concept of "role" is equivalent to a post number/station number, and is also similar to the role in a film and a television drama: one role in the same period (in childhood, juvenile, middle-age...) can be played by only one actor or actress at the same time, but one actor or actress may play multiple roles.

After the role is created, a user may be related to the role in the process of creating the user, or may be related to the role at any time after the user is created. After the user is related to the role, the user can be released from the relation to the role at any time, and the relation between the user and another role may be created at any time.

The role is composed of: a post name + a post number, for example, a workshop worker 1, a workshop worker 2, a workshop worker 3, and so on. The role is an independent individual, and is equivalent to the concept of a post number or a station number, but different from the role in a conventional permission management system. The concept of the role in the conventional permission management system has the nature of a group or class such as a post, a position, a type of work or the like.

The following example shows the relationship among an employee, a user, and a role after Zhang San, an employee, entered a company as follows: 1. Recruiting: after the employee is recruited, the role of the corresponding post number or station number is directly selected for the user (employee) to be related. For example, when Zhang San has joined the company (the company has assigned a user for Zhang San) and works at the sales department I to be responsible for selling refrigerator products in Beijing area (the corresponding role is "sales engineer 5" under the sales department I), then the user Zhang San directly selects and is related to the role "sales engineer 5".
2. Adding position: After Zhang San has worked for a period of time, the company further arranges Zhang San to be responsible for selling TV products in Beijing area (the corresponding role is "sales engineer 8" under the sales department I) and to serve as a supervisor of an after-sales department (the corresponding role is "after-sales supervisor 1). Therefore, two roles, that is, "sales engineer 8" under the sales department I and "after-sales supervisor 1" under the after-sales department, are additionally related to the user Zhang San. In this case, the employee Zhang San is related to three roles: "sales engineer 5" and "sales engineer 8" under the sales department I, and "after-sales supervisor 1" under the after-sales department. Therefore, the user Zhang San owns the permissions of the three roles.
3. Reducing position: After a while, the company has decided to let Zhang San serve as an after-sales manager (corresponding to a role "after-sales manager" under the after-sales department) without taking up other positions any more. Therefore, the user Zhang San is related to the role "after-sales manager" under the after-sales department, and is released from the relation to the previous three roles ("sales engineer 5" and "sales engineer 8" under the sales department I, and "after-sales supervisor 1" under the sales department). In this case, the user Zhang San owns only the permissions of the role "after-sales manager" under the after-sales department.
4. Adjusting permissions of a role (adjusting the permissions of the role itself): if the company has decided to add permissions to the after-sales manager, the permissions only need to be added to the role of the after-sales manager. With the increase in the permissions of the role of the after-sales manager, the permissions of the user Zhang San are also increased.
5. Resignation: After one year, Zhang San resigns. It is only necessary to cancel the relation of the user Zhang San to the role "after-sales manager" under the after-sales department.

For example, during the dynamic operation of the company, recruiting and resigning of staff often occur continuously, but post numbers or station numbers seldom change (or even remain unchanged within a period of time).

Conventional authorization method: In the case of a large quantity of system function points, authorizing the conventional roles that have the nature of a group or class involves a large and cumbersome workload and is very error-prone, and errors are not easily detectable in a short time and tend to cause loss to a system user.

Authorization method of the present application: in the present application, the authorization is made to the role having the nature of a post number or station number, and the user is related to the role to determine (obtain) permissions. Therefore, the permissions of the user are controlled by only a simple user-role relation. Controlling the permissions is simple, easily operable, clear, and explicit, thereby significantly improving the efficiency and reliability of authorization.

The above is only a preferred embodiment of the present invention, and it should be understood that the present invention is not limited to the forms disclosed herein, and is not to be construed as being limited to the other embodiments, but may be used in various other combinations, modifications and environments. Modification can be made by the techniques or knowledge of the above teachings or related art within the scope of the teachings herein. All changes and modifications made by those skilled in the art without departing from the spirit and scope of the present invention are intended to be within the protection scope of the appended claims.

## Claims

1. A method for managing an instant messaging account in a management system, comprising the following steps: creating a role in the system, wherein said role is an independent individual not a group/a class, and during the same period, one role can only be related to a unique user, while one user is related to one or more roles; and relating a role-nature instant messaging account to the role according to work content of the role in the management system, wherein during the same period, one role-nature instant messaging account can only be related to one role during the same period, while one role can only be related to one role-nature instant messaging account; and
creating a relation between a user and a role, and for any user, using the role-nature instant messaging accounts related to all roles related to the user as role-nature instant messaging accounts of the user and/or an employee corresponding to the user.

2. The method for managing an instant messaging account in a management system according to claim 1, wherein after a role-nature instant messaging account is related to a role, the role-nature instant messaging account related to the role cannot be replaced; or
after a role-nature instant messaging account is related to a role and the role-nature instant messaging account is put into use, the role-nature instant messaging account related to the role cannot be replaced.

3. The method for managing an instant messaging account in a management system according to claim 1, wherein when a role-nature instant messaging account of a role needs to be replaced, a relation of the role to the original role-nature instant messaging account is canceled, and the role is related to a new role-nature instant messaging account.

4. The method for managing an instant messaging account in a management system according to claim 1, further comprising: selecting one or more roles as supervising roles, and setting a supervised role for each supervising role respectively, so that a user related to the supervising role or an employee corresponding to the user can operate role-nature instant messaging accounts related to all supervised roles corresponding to the supervising role, wherein said operation comprises viewing communication content.

5. The method for managing an instant messaging account in a management system according to claim 1, further comprising: relating an individual-nature instant messaging account to a user/an employee, wherein during the same period, one user/one employee can only be related to one individual-nature instant messaging account, while one individual-nature instant messaging account can only be related to one user/one employee.

6. The method for managing an instant messaging account in a management system according to claim 5, wherein after an individual-nature instant messaging account is related to a user/an employee, the individual-nature instant messaging account related to the user/employee cannot be replaced; or
after an individual-nature instant messaging account is related to a user/an employee and the individual-nature instant messaging account is put into use, the individual-nature instant messaging account related to the user/employee cannot be replaced.

7. The method for managing an instant messaging account in a management system according to claim 5, wherein when an individual-nature instant messaging account is related to a user, the individual-nature instant messaging account related to the user is used as an individual-nature instant messaging account of an employee corresponding to the user.

8. The method for managing an instant messaging account in a management system according to claim 5, wherein when an individual-nature instant messaging account is related to an employee, the individual-nature instant messaging account related to the employee is used as an individual-nature instant messaging account of a user corresponding to said employee.

9. The method for managing an instant messaging account in a management system according to claim 5, further comprising: selecting one or more roles as supervising roles, and setting a supervised role for each supervising role respectively, so that:
a user related to the supervising role or an employee corresponding to the user can operate individual-nature instant messaging accounts of a user related to all supervised roles corresponding to the supervising role; or
a user related to the supervising role or an employee corresponding to the user can operate individual-nature instant messaging accounts of an employee corresponding to a user related to all supervised roles corresponding to the supervising role.

10. The method for managing an instant messaging account in a management system according to claim 1, wherein said role-nature instant messaging account is an account of an instant messaging application in the system or an account of instant messaging software provided by a third party.
